# EUROPEAN PATENT APPLICATION

(11) **EP 3 272 983 A1**
(43) Date of publication of application: **24.01.2018**
(21) Application number: 17178364.0
(22) Date of filing: 28.06.2017
(51) Int. Cl.: E05D 15/50, B60R 7/04, E05D 7/12

(54) **CONSOLE LID OPENING/CLOSING MECHANISM**

(30) Priority: 22.07.2016 JP 2016144379
(71) Applicant: Kojima Industries Corporation, Toyota-shi, Aichi 471-0875 (JP)
(72) Inventor: HATAKEYAMA, Takahiro, Toyota-shi, Aichi (JP)
(74) Representative: Maikowski & Ninnemann Patentanwälte Partnerschaft mbB

(57) **Abstract**

A dual swing-mode console lid opening/closing mechanism that allows a console lid to be selectively opened and closed about opposite sides of a console body may include a pair of hinge units respectively positioned on opposite sides of the console lid that respectively correspond to the opposite sides of the console body, and a pair of manipulation knobs respectively corresponding to the hinge units. The hinge units are respectively rotatably attached to the console lid and respectively include hinge stoppers that are respectively associated with the manipulation knobs. The hinge units are arranged and constructed to be connected to the console body in a lid-closed condition in which the console lid is closed, to form connected conditions of the hinge units to the console body. Each of the hinge stoppers is arranged and constructed to engage the console body in the lid-closed condition. Each of the hinge stoppers is arranged and constructed to be disengaged from the console body by manipulating the corresponding manipulation knob.

## Description

The present teaching relates to a console lid opening/closing mechanism. More specifically, the present teaching relates to a dual swing-mode console lid opening/closing mechanism that allows a console lid to be selectively opened and closed about opposite sides of a console body.

A known dual swing-mode console lid opening/closing mechanism is taught, for example, by Japanese Laid-Open Patent Publication No. 2007-245838 (JP2007-245838A). In the console lid opening/closing mechanism of a console box, a console lid is arranged and constructed to be selectively rotated about two longitudinal side edges (i.e., laterally opposite side edges) of the console body that are laterally oppositely positioned across a console opening (cavity). In particular, the console body and the console lid are linked by a pair of (first and second) elongated linkage members. Each of the first and second linkage members has a pivotal end (one end) and a swing end (the other end). The first and second linkage members are respectively positioned on two lateral side edges (i.e., longitudinally opposite side edges) of the console body that are longitudinally oppositely positioned across the console opening. The first and second linkage members are laterally reversed each other. The pivotal end of each of the first and second linkage members is rotatably connected to the console box. Conversely, the swing end of each of the first and second linkage members is rotatably connected to the console lid.

The first and second linkage members respectively have latching mechanisms. The latching mechanisms are respectively arranged and constructed to connect the first and second linkage members to the console body in a lid-closed condition in which the console lid is closed. Further, the latching mechanisms are respectively configured to be unlatched or released by operating manipulation knobs.

In order to open or rotate the console lid in a first direction, the first linkage member is disconnected from the console body by operating the corresponding manipulation knob. As a result, the first linkage member may be integrated with the console lid while the second linkage member may remain connected or anchored to the console body. In this condition, when one peripheral edge of the console lid is lifted up, the console lid may rotate (swing) about the pivotal end of the first linkage member integrated therewith and the swing end of the second linkage member anchored to the console body. Thus, the console lid may be opened in the first direction. To the contrary, in order to open the console lid in a second direction, the second linkage member is disconnected from the console body by operating the corresponding manipulation knob. As a result, the second linkage member may be integrated with the console lid while the first linkage member may remain connected or anchored to the console body. In this condition, when the other peripheral edge of the console lid is lifted up, the console lid may rotate (swing) about the pivotal end of the second linkage member integrated therewith and the swing end of the first linkage member anchored to the console body. Thus, the console lid may be opened in the second direction.

According to the known art, the console lid may be selectively opened about the two longitudinal side edges in both directions. However, in the known art, when the console lid is opened, one of the first and second linkage members may remain on the console body. This may lead to an inferior appearance of the console box in use. Thus, there is a need in the art for an improved dual swing-mode console lid opening/closing mechanism.

In one aspect of the present teaching, a dual swing-mode console lid opening/closing mechanism that allows a console lid to be selectively opened and closed about opposite sides of a console body may include a pair of hinge units respectively positioned on opposite sides of the console lid that respectively correspond to the opposite sides of the console body, and a pair of manipulation knobs respectively corresponding to the hinge units. The hinge units are respectively rotatably attached to the console lid and respectively include hinge stoppers that are respectively associated with the manipulation knobs. The hinge units are arranged and constructed to be connected to the console body in a lid-closed condition in which the console lid is closed, to form connected conditions of the hinge units to the console body. Each of the hinge stoppers is arranged and constructed to engage the console body in the lid-closed condition, so as to lock the connected condition of the corresponding hinge unit to the console body. Each of the hinge stoppers is arranged and constructed to be disengaged from the console body by manipulating the corresponding manipulation knob, so as to unlock the connected condition of the corresponding hinge unit to the console body.

According to the aspect, the connected condition of one of the hinge elements (the hinge units) to the console body may be unlocked by manipulating the corresponding manipulation knob. As a result, the console lid may be opened in one direction via the other of the hinge elements (the hinge units). At this time, one of the hinge elements may be rotated with the console lid. That is, when the console lid is opened in one direction via the other of the hinge elements, one of the hinge elements may not remain on the console body. Therefore, the console box may have a good appearance in use.

In another aspect of the present teaching, the hinge units respectively include hinge elements and hinge shafts that respectively function to rotatably attach the hinge elements to the console lid. The console body has connecting holes formed therein. The hinge elements respectively have connecting portions. The connecting portions are respectively arranged and constructed to be fitted into the connecting holes in the lid-closed condition so as to form the connected conditions of the hinge units.

In another aspect of the present teaching, the connecting holes of the console body respectively have outwardly faced oblique surfaces that are inclined downward and inward. The connecting portions of the hinge elements respectively have inwardly faced oblique surfaces complementary to the outwardly faced oblique surfaces of the connecting holes. The oblique surfaces of the connecting portions engage the oblique surfaces of the connecting holes in a condition in which the connecting portions are fitted into the connecting holes.

Other objects, features and advantage of the present teaching will be readily understood after reading the following detailed description together with the accompanying drawings and the claims.
FIG. 1 is a perspective view of a console box having a console lid opening/closing mechanism according to a representative embodiment in a lid-opened condition in which a console lid is opened;
FIG. 2 is an enlarged cross-sectional view taken along line II-II in FIG. 1;
FIG. 3 is a view similar to FIG. 2 in a lid-closed condition in which the console lid is closed;
FIG. 4 is an enlarged view of an encircled portion IV in FIG. 3;
FIG. 5 is an exploded perspective view of the console box, in which a lid outer member is omitted;
FIG. 6 is a perspective view of the console box in the lid-closed condition, which shows a positional relation of hinge units, knobs, latching rods, disconnecting members and a locking mechanism in an assembled condition, in which the lid outer member and a lid inner member are omitted;
FIG. 7(A) is an enlarged perspective view of one of the hinge units and one of the disconnecting members;
FIG. 7(B) is an enlarged perspective view of the other of the disconnecting members and the other of the disconnecting members;
FIG. 8 is a perspective view of the knobs, the latching rods, the disconnecting members and the locking mechanism in an assembled condition;
FIG. 9 is a plan view of the console box in the lid-closed condition, which shows a condition before each of the knobs is manipulated, in which the lid outer member is omitted;
FIG. 10 is a plan view of the console box in the lid-closed condition, which shows a condition after one of the knobs is manipulated, in which the lid outer member is omitted;
FIG. 11 is a cross-sectional view taken along line XI-XI in FIG. 9;
FIG. 12 is a cross-sectional view taken along line XII-XII in FIG. 10;
FIG. 13 is a cross-sectional view taken along line XIII-XIII in FIG. 9;
FIG. 14 is a view similar to FIG. 13 in the lid-opened condition in which the console lid is opened; and
FIG. 15 is a perspective view of the console box in the lid-opened condition in which the console lid is opened, which shows a positional relation of the hinge units, the knobs, the latching rods, the disconnecting members and the locking mechanism in an assembled condition, in which the lid outer member and the lid inner member are omitted.

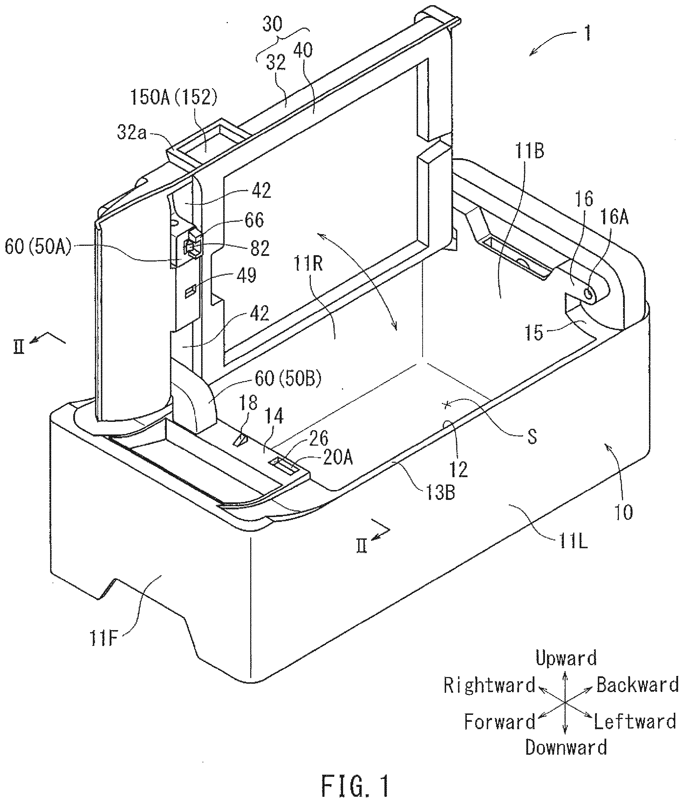

A representative embodiment will now be described in detail with reference to FIGS. 1 to 15.

In this embodiment, a dual swing-mode console lid (door) opening/closing mechanism according to the present embodiment may be applied to a vehicular console box 1 that is constructed to be disposed between a driver's seat (not shown) and a passenger seat (not shown) in a vehicle. Further, forward and backward, rightward and leftward, and upward and downward in the drawings respectively correspond to forward and backward, rightward and leftward, and upward and downward of the vehicle.

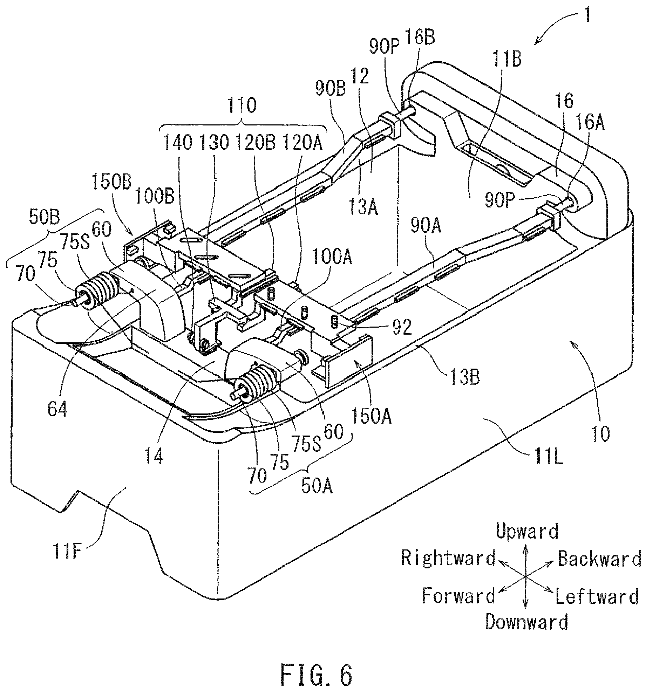

As shown in FIGS. 1 and 6, the console box 1 into which the dual swing-mode console lid opening/closing mechanism (which will be hereinafter described) of the present embodiment is incorporated may be composed of a rectangular open-topped box-shaped console body 10 (a main body) and a console lid (door) 30. The console body 10 may have right and left longitudinal hollow side walls (i.e., laterally opposite hollow side walls) 11R and 11L and front and back lateral hollow side walls (i.e., longitudinally opposite hollow side walls) 11F and 11B that define a storage portion or cavity S therein. Further, the console body 10 may have right and left side wall edges 13A and 13B that are respectively formed in the right and left side walls 11 R and 11L, and front and rear side wall edges 14 and 15 that are respectively formed in the front and back side walls 11F and 11B. Conversely, the console lid 30 may be constructed to cover or close a rectangular opening 12 of the console body 10, The console lid 30 may selectively rotate with respect to the right and left side wall edges 13A and 13B of the console body 10 in a lateral direction (rightward and leftward) due to the dual swing-mode console lid opening/closing mechanism. Further, the console box 1 may substantially be made of resin.

As shown in FIGS. 1, 2 and 5, the console body 10 may have an unlocking member 18 formed in the front side wall edge 14 thereof. The unlocking member 18 may preferably be positioned in a central portion of the front side wall edge 14 in the lateral direction. The unlocking member 18 may be formed as a projection having an upper surface that extend obliquely backward and upward. Further, the console body 10 may have a pair of right and left (first and second) connecting holes 20B and 20A that are formed in the front side wall edge 14 thereof and are laterally separately positioned across the unlocking member 18. The connecting holes 20B and 20A (which may be referred to as fitting portions) may be formed as rectangular through holes that penetrate the plate-shaped front side wall edge 14 in a thickness direction (a vertical direction).

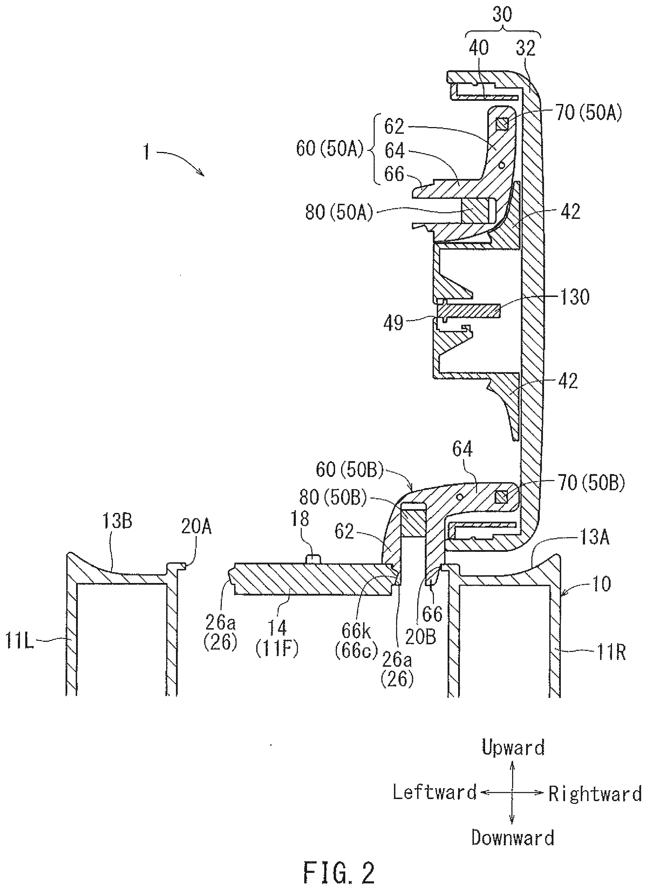

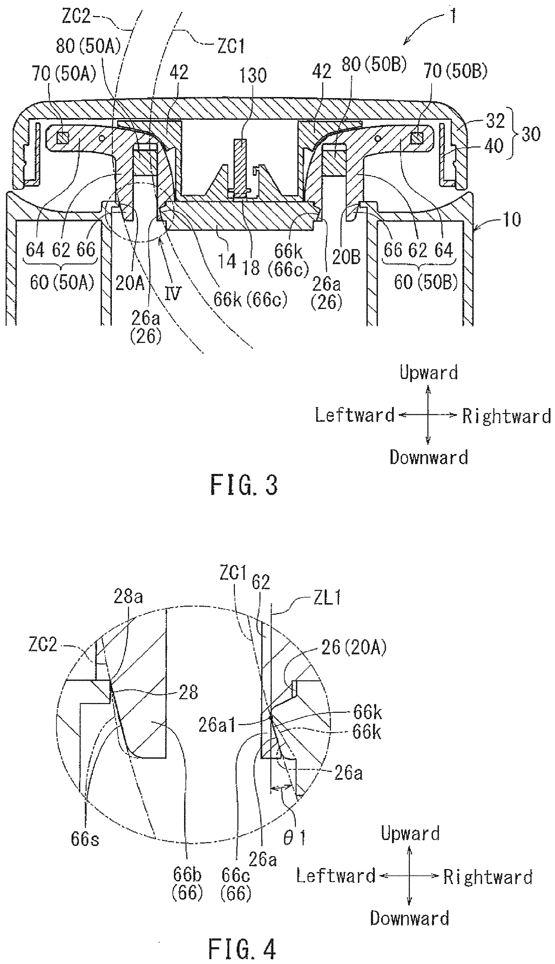

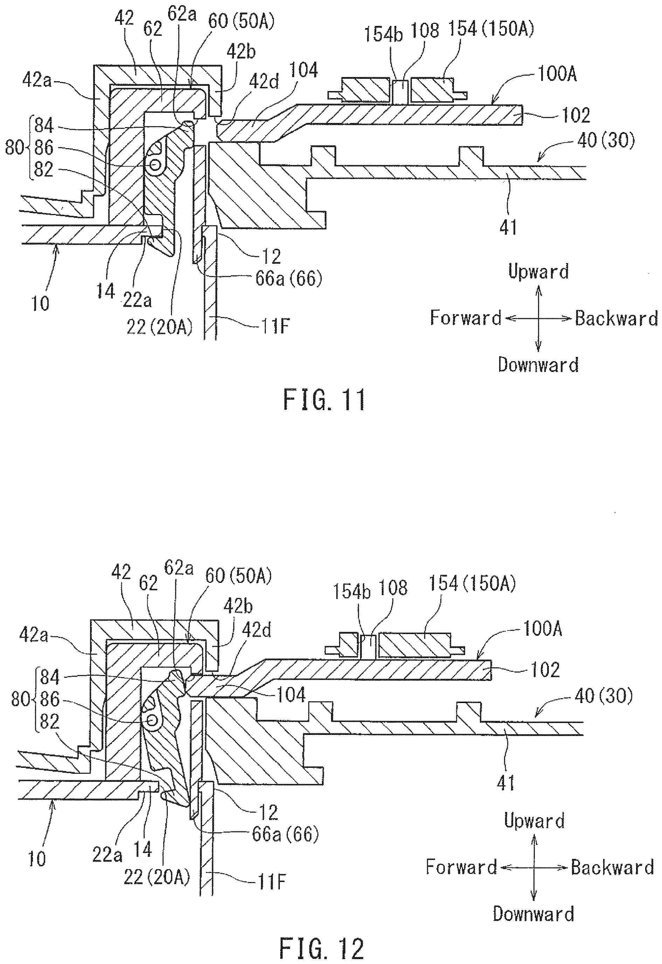

As shown in FIGS. 11 and 12, the connecting holes 20B and 20A may respectively have lower shouldered engagement portions 22a. Each of the engagement portions 22a may be formed by partially removing a lower surface of the front side wall edge 14 along a front surface 22 of each of the connecting holes 20B and 20A. Further, as shown in FIGS. 2 to 4, laterally inner surfaces 26 of the connecting holes 20B and 20A (a right surface of the left connecting hole 20A and a left surface of the right connecting hole 20B) may respectively have outwardly faced oblique surfaces 26a formed therein. Each of the oblique surfaces 26a (which may be referred to as fitting surfaces) may be inclined (laterally) downward and inward. As shown in FIG. 4, each of the oblique surfaces 26a may be inclined at an angle of *θ* 1 with respect to a vertical line ZL1 passing through an upper end 26a1 of each of the oblique surfaces 26a. Conversely, laterally outer surfaces 28 of the connecting holes 20B and 20A (a left surface of the left connecting hole 20A and a right surface of the right connecting hole 20B) may respectively be formed as vertical surfaces unlike the laterally inner surfaces 26.

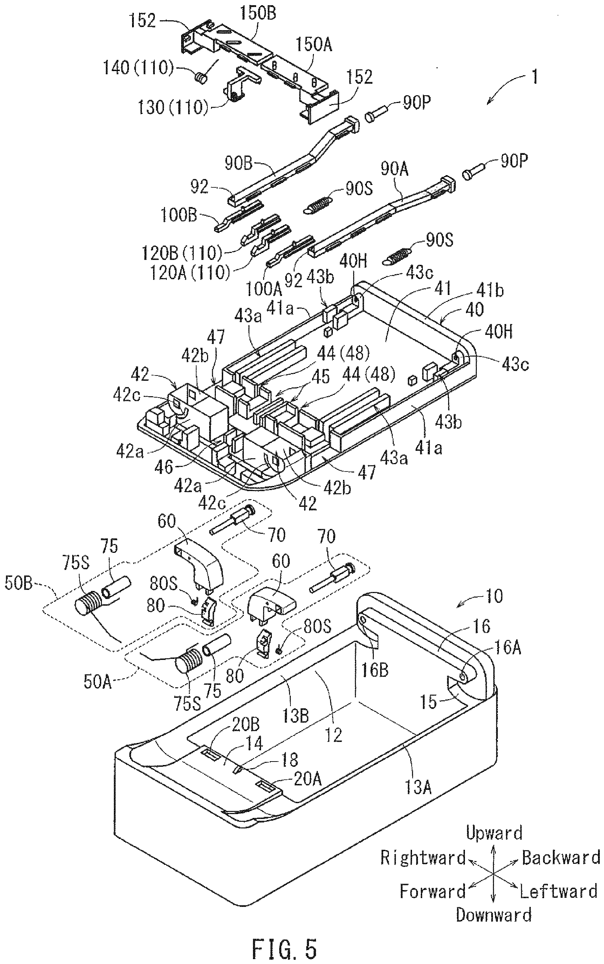

As shown in FIGS. 1 and 5, the console body 10 may have a T-shaped rod retainer member 16 formed in the rear side wall edge 15 thereof. The rod retainer member 16 may have a pair of right and left pin insertion holes 16B and 16A that are formed in right and left ends thereof. The pin insertion holes 16B and 16A may be opened forward. Further, the connecting holes 20B and 20A, the unlocking member 18 and the rod retainer member 16 (the pin insertion holes 16B and 16A) may constitute the dual swing-mode console lid opening/closing mechanism.

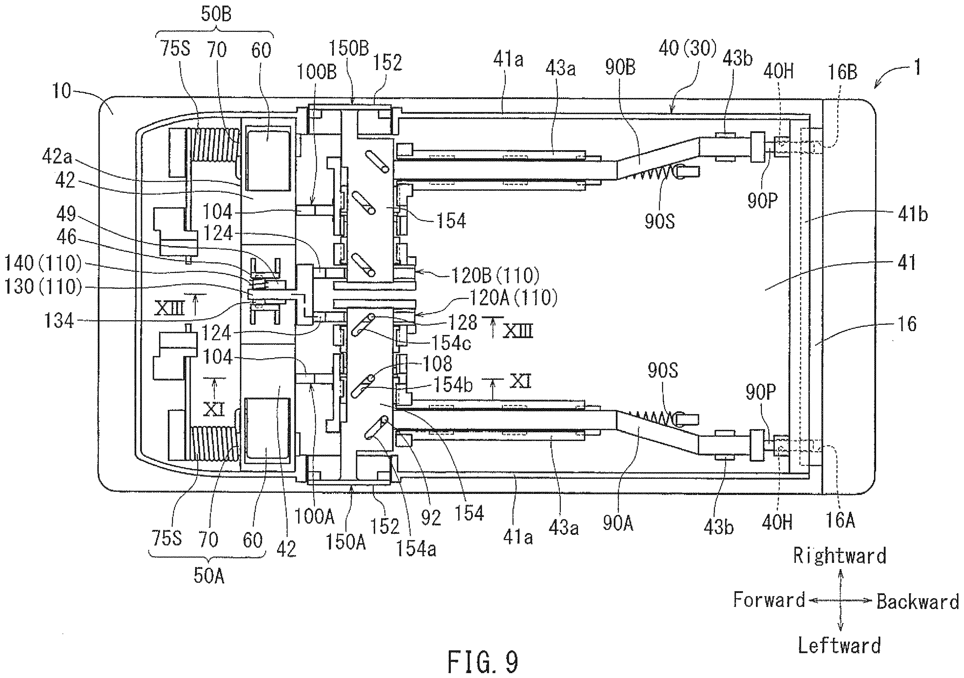

As shown in FIG. 1, the console lid 30 may have an inner shell 40 and an outer shell 32 mated to each other. As shown in FIG. 5, the inner shell 40 may substantially be composed of a plate-shaped substrate 41, a pair of right and left side frames 41 a and a rear frame 41b. As shown in FIGS. 5 and 9, the inner shell 40 may have a pair of right and left (first and second) hinge units 50B and 50A, a pair of right and left (first and second) partially angled elongated latching rods 90B and 90A, a pair of right and left (first and second) elongated disconnecting members 100B and 100A, a locking mechanism 110 and a pair of right and left (first and second) knobs 150B and 150A attached thereto, which may also constitute the dual swing-mode console lid opening/closing mechanism. Further, as shown in FIG. 5, the inner shell 40 may have a pair of open-bottomed hollow hinge unit storing portions 42 formed in the substrate 41 and positioned so as to substantially correspond to the left connecting hole 20A of the console body 10 in a lid-closed condition in which the console lid 30 is closed (FIG. 3). Further, the inner shell 40 may have a pair of first rod support members 43a, a pair of second rod support members 43b, a pair of rod end retainers 43c positioned adjacent to the rear frame 41b, disconnecting member retainers 44, slide member retainers 45, a rotatable member retainer 46, and knob retainers 48, all of which are formed in the substrate 41. The inner shell 40 may also have a pair of manipulating portion attachment ports 47 that are respectively formed in the side frames 41 a. Further, as shown in FIG. 1, the outer shell 32 may have a pair of window portions 32a (one of which is shown) that are respectively arranged so as to correspond to the manipulating portion attachment ports 47 of the inner shell 40. Further, the right and left hinge units 50B and 50A and the above-described connecting holes 20B and 20A may constitute a connecting mechanism.

As shown in FIGS. 5 and 6, the right and left hinge units 50B and 50A may be laterally separately positioned on a front portion of the substrate 41. In particular, the right and left hinge units 50B and 50A may be positioned so as to respectively substantially correspond to the right and left connecting holes 20B and 20A of the console body 10 in the lid-closed condition. Further, the right and left hinge units 50A and 50A may substantially be the same except that they are shaped to be symmetrical to each other. Therefore, in the following, the left hinge unit 50A will be described as a representative of the hinge units 50B and 50A. Elements that are the same in the left hinge unit 50A and the right hinge unit 50B will be identified by the same reference numerals and a description of the right hinge unit 50B may be omitted.

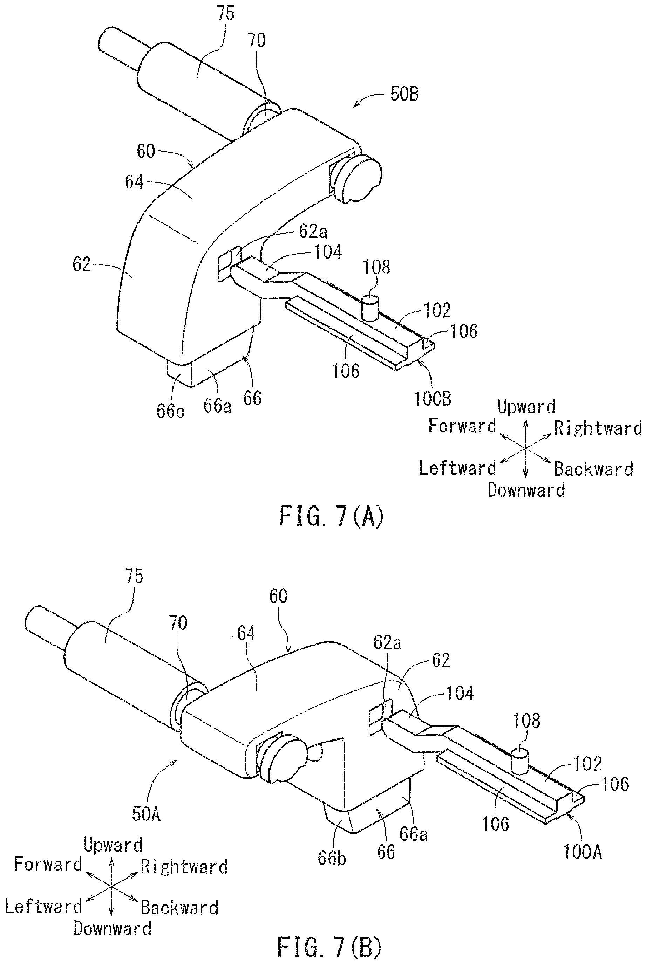

As shown in FIG. 5, the (left) hinge unit 50A may be composed of a housing (hinge element) 60, a hinge pin or shaft 70, a hinge stopper 80, a stopper spring 80S, a hinge sleeve 75 and a bias (assist) spring 75S. As shown in FIGS. 3 and 7(B), the housing 60 may include a rectangular parallelepiped open-bottomed hollow main portion 62, a shaft holding portion 64 integrally connected to an upper portion of the main portion 62 and projected outward (leftward) therefrom, and a connecting portion 66 formed in a lower portion of the main portion 62. Further, as shown in FIGS. 1 and 3, the housing 60 (the main portion 62 and the shaft holding portion 64) may be received in the open-bottomed hollow hinge unit storing portion 42 formed in the inner shell 40 (the substrate 41) while the connecting portion 66 is projected downward therefrom. The connecting portion 66 of the housing 60 may be arranged and constructed to be (removably) inserted or fitted into the left connecting hole 20A of the console body 10 in the lid-closed condition (FIG. 3). As will be appreciated, in a condition in which the connecting portion 66 of the housing 60 is fitted into the connecting hole 20A of the console body 10, the housing 60 (the hinge unit 50A) may be connected or anchored to the console body 10. Further, the condition may be hereinafter referred to as a (removable) connected condition of the housing 60 (the hinge unit 50A) to the console body 10.

As shown in FIGS. 11 and 12, the hinge stopper 80 may be positioned within the main portion 62 of the housing 60. The hinge stopper 80 may include a pawl member 82, a force-receiving portion 84 and a rotatably supporting portion 86. As will be recognized, the pawl member 82 and the force-receiving portion 84 may respectively be positioned above and below the rotatably supporting portion 86. The pawl member 82 may be configured to be projected into the connecting hole 20A in the lid-closed condition (i.e., in the connected condition of the housing 60). Further, the rotatably supporting portion 86 may be rotatably attached to the main portion 62 of the housing 60 so as to rotate in a front-back direction.

Upon rotation of the rotatably supporting portion 86, the hinge stopper 80 (the pawl member 82 and the force-receiving portion 84) may rotate between a connecting position in which the pawl member 82 engages the engagement portion 22a of the connecting hole 20A (FIG. 11) and a disconnecting position in which the pawl member 82 is released or disengaged therefrom (FIG. 12). When the hinge stopper 80 is positioned in the connecting position, the housing 60 (the hinge unit 50A) may be held in the connected condition in which the housing 60 is connected to the console body 10. Further, the hinge stopper 80 may be biased toward the connecting position by the stopper spring 80S (FIG.5) attached to the rotatably supporting portion 86. In this embodiment, a coil spring may be used as the stopper spring 80.

As shown in FIG. 7(B), the hinge shaft 70 may penetrate the shaft holding portion 64 of the housing 60 in the front-back direction. Further, as shown in FIG. 5, the hinge shaft 70 may be inserted into insertion holes (not labeled) formed in front and back walls 42a and 42b of the hinge unit storing portion 42. Therefore, the hinge unit storing portion 42 can rotate about the hinge shaft 70 via the front and back walls 42a and 42b. As a result, the inner shell 40 (the console lid 30) can rotate about the hinge shaft 70. That is, the inner shell 40 (the console lid 30) can rotate with respect to the housing 60 (the shaft holding portion 64) in the lateral direction. This means that the housing 60 (the hinge unit 50A) may be rotatably attached to the inner shell 40 (the console lid 30).

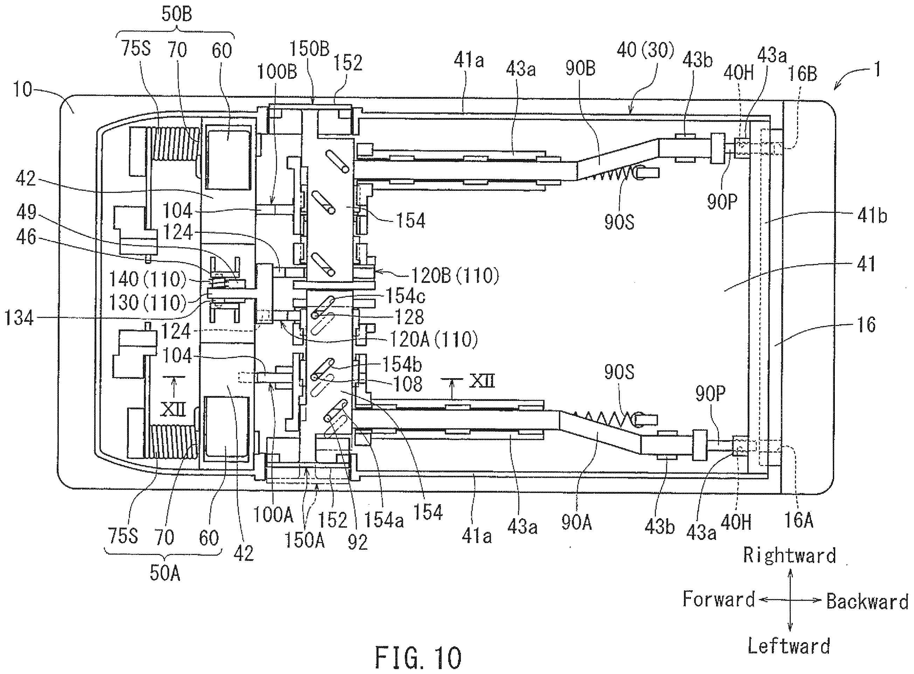

As shown in FIGS. 9 and 10, the hinge shaft 70 may be configured such that a front end portion thereof may be projected forward beyond the front wall 42a of the hinge unit storing portion 42. The hinge sleeve 75 may be attached to or journaled on the front end portion of the hinge shaft 70. Further, the bias spring 75S, i.e., a coil spring, may be attached to the hinge sleeve 75. The bias spring 75S may have one end that is secured to the inner shell 40 of the console lid 30 and the other end that is attached to the shaft holding portion 64 (FIG. 6) of the housing 60 via a semicircular slot 42C (FIG. 5) formed in the hinge unit storing portion 42. Thus, the console lid 30 may be biased by a spring force of the bias spring 75S in a lid-opening direction in which the console lid 30 may be rotated or opened via the hinge unit 50A (the housing 60).

As previously described, the connecting portion 66 of the housing 60 may be arranged and constructed to be fitted into the connecting hole 20A of the console body 10 (FIG. 3). In addition, as shown in FIG. 2, the connecting portion 66 of the housing 60 may be arranged and constructed to be removed from the connecting hole 20A of the console body 10 when the console lid 30 is rotated or opened via the right hinge unit 50B (the housing 60). In particular, as shown in FIG. 1, the connecting portion 66 may have a substantially C-shape in transverse cross section and may include a back element 66a (FIG. 11) and a pair of inner and outer (side) elements 66c and 66b (FIG. 4). As shown in FIG. 4, one of the side elements, i.e., the outer element 66b, may have an outwardly faced oblique surface 66s that is inclined rightward (inward in the lateral direction) toward a distal (lower) end of the outer element 66b. Conversely, the other of the side elements, i.e., the inner element 66c, may have an inwardly faced oblique surface 66k corresponding (complementary) to the oblique surface 26a of the connecting hole 20A. The oblique surface 66k (which may be referred to as an engagement surface) may engage the oblique surface 26a of the connecting hole 20A in the connected condition of the housing 60 (i.e., in the condition in which the connecting portion 66 is fitted into the connecting hole 20A.

As shown in FIGS. 3 and 4, the oblique surface 66s formed in the outer element 66b of the connecting portion 66 may preferably be shaped so as to be positioned inside of a circle ZC2. The circle ZC2 may be a hypothetical circle centered at an axis line of the hinge shaft 70 of the right hinge unit 50B and passing through an upper end periphery 28a of the outer (left) surface 28 of the connecting hole 20A. Preferably, the oblique surface 66s of the outer element 66b may be shaped so as to substantially be aligned with a tangential line to the circle ZC2 at a point corresponding to the upper end periphery 28a of the outer surface 28 of the connecting hole 20A in the connected condition of the hinge unit 50A. As a result, when the console lid 30 (the inner shell 40) is rotated about the hinge shaft 70 of the right hinge unit 50B so as to be closed and opened, the oblique surface 66s (the outer element 66b) may be prevented from interfering with the upper end periphery 28a of the outer surface 28 of the connecting hole 20A. Therefore, the connecting portion 66 can be smoothly inserted into and removed from the connecting hole 20A when the console lid 30 is closed and opened.

As shown by a chain double-dashed line in FIG. 4, if the oblique surface 66s of the outer element 66b is shaped so as to be positioned outside of the circle ZC2, when the console lid 30 is rotated about the hinge shaft 70 of the right hinge unit 50B so as to be closed and opened, the oblique surface 66s may interfere with the upper end periphery 28a of the outer surface 28 of the connecting hole 20A. In such a case, the connecting portion 66 cannot be smoothly inserted into and removed from the connecting hole 20A.

As shown in FIGS. 3 and 4, the oblique surface 66k formed in the inner element 66c of the connecting portion 66 may preferably be shaped so as to be positioned outside of a circle ZC1. The circle ZC1 may be a hypothetical circle centered at the axis line of the hinge shaft 70 of the right hinge unit 50B and passing through an upper end periphery 26a1 of the oblique surface 26a of the connecting hole 20A. Preferably, the oblique surface 66k of the inner element 66c may be shaped so as to substantially be aligned with a tangential line to the circle ZC1 at a point corresponding to the upper end periphery 26a1 of the oblique surface 26a of the connecting hole 20A in the connected condition of the hinge unit 50A. As a result, when the console lid 30 (the inner shell 40) is rotated about the hinge shaft 70 of the right hinge unit 50B so as to be closed and opened, the oblique surface 66k (the inner element 66c) may be prevented from interfering with the upper end periphery 26a1 of the oblique surface 26a. of the connecting hole 20A. Therefore, the connecting portion 66 can be smoothly inserted into and removed from the connecting hole 20A when the console lid 30 is closed and opened. Further, in order to perform smooth engagement of the oblique surface 66k of the inner element 66c and the oblique surface 26a of the connecting hole 20A, the inclination angle *θ* 1 of the oblique surface 26a of the connecting hole 20A may preferably be determined such that the oblique surface 26a may substantially be aligned with the tangential line to the circle ZC1.

As shown by a chain double-dashed line in FIG. 4, if the oblique surface 66k of the inner element 66c is shaped so as to be positioned inside of the circle ZC1, when the console lid 30 is rotated about the hinge shaft 70 of the right hinge unit 50B so as to be closed and opened, the oblique surface 66k may interfere with the upper end periphery 26a1 of the oblique surface 26a of the connecting hole 20A. In such a case, the connecting portion 66 cannot be smoothly inserted into and removed from the connecting hole 20A.

As shown in FIGS. 5 and 6, the right and left latching rods 90B and 90A may be laterally separately positioned on the substrate 41. In particular, the right and left latching rods 90B and 90A may respectively be positioned behind the housing 60 of the right hinge unit 50B and the housing 60 of the left hinge unit 50A so as to respectively extend in a longitudinal direction (the front-back direction). Further, the right and left latching rods 90B and 90A may substantially be the same except that they are shaped to be symmetrical to each other. Therefore, in the following, the left latching rod 90A will be described as a representative of the right and left latching rods 90B and 90A. Elements that are the same in the left latching rod 90A and the right latching rod 90B will be identified by the same reference numerals and a description of the right latching rod 90B may be omitted.

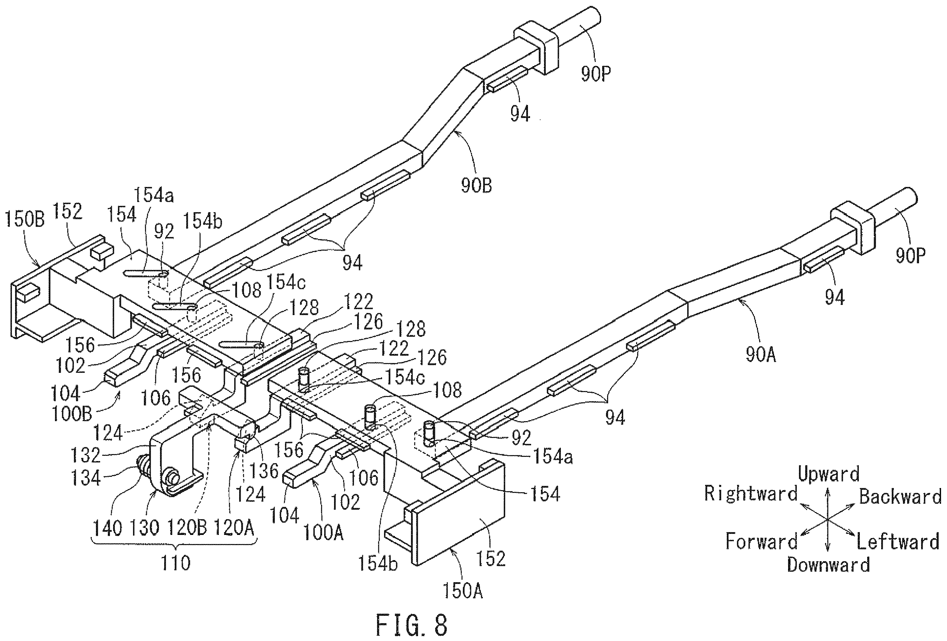

As shown in FIG. 5, the latching rod 90A may extend to a rear portion of the substrate 41, i.e., a position adjacent to the rear frame 41b of the inner shell 40. As shown in FIGS. 8 and 9, the latching rod 90A may have a vertical slide pin 92 attached to a front end thereof and a horizontal hinge pin 90P attached rear end thereof. The slide pin 92 may be projected upward from the front end of the latching rod 90A. Conversely, the hinge pin 90P may be projected backward from the rear end of the latching rod 90A. The hinge pin 90P may preferably be positioned coaxially with the hinge shaft 70 of the hinge unit 50A in the front-back direction. Further, the hinge pin 90P may be slidably inserted into a pin insertion hole 40H formed in the rod end retainer 43c and extending backward through the rear frame 41b. As will be appreciated, the pin insertion hole 40H may be positioned so as to be axially aligned with the pin insertion hole 16A formed in the rod retainer member 16 of the console body 10 in the lid-closed condition.

As shown in FIG. 8, the latching rod 90A may have a plurality of flange-shaped slide guide members 94 formed in both sides thereof. The latching rod 90A may be slidably supported by the first and second rod support members 43a and 43b via the slide guide members 94 so as to slide in the front-back direction. Further, the latching rod 90A may be arranged and constructed to slide between a protruded or latched position in which the hinge pin 90P is introduced into the pin insertion hole 16A of the console body 10 (FIG. 9) and a drawn or unlatched position in which the hinge pin 90P is drawn from the pin insertion hole 16A of the console body 10 (FIG. 10). Further, the latching rod 90A may be normally biased toward the latched position by a compression spring or pull-back spring 90S.

As shown in FIG. 5, the right and left disconnecting members 100B and 100A may be positioned between the right and left latching rods 90B and 90A in parallel on the substrate 41. Further, the right and left disconnecting members 100B and 100A may be positioned behind the right and left hinge units 50B and 50A. Further, the right and left disconnecting members 100B and 100A may be the same. Therefore, in the following, the left disconnecting member 100A will be described as a representative of the right and left disconnecting members 100B and 100A. Elements that are the same in the left disconnecting member 100A and the right disconnecting member 100B will be identified by the same reference numerals and a description of the right disconnecting member 100B may be omitted.

As shown in FIG. 7 (B), the disconnecting member 100A may include a base portion 102 elongated in the front-back direction, a contact portion 104 projected forward from the base portion 102, a pair of flange-shaped slide guide members 106 projected laterally oppositely from the base portion 102 and a vertical slide projection 108 projected upward from the base portion 102. The disconnecting member 100A thus constructed may be slidably supported by the disconnecting member retainers 44 via the slide guide members 106 so as to slide in the front-back direction. Further, as shown in FIG. 11 and 12, the disconnecting member 100A may be positioned such that the contact portion 104 is introduced into and drawn from the main portion 62 of the housing 60 of the hinge unit 50A through an opening 42d formed in the back wall 42b of the hinge unit storing portion 42 and a through hole 62a formed in the main portion 62 of the housing 60. As will be recognized, the through hole 62a may be positioned so as to be aligned with the force-receiving portion 84 of the hinge stopper 80 received in the main portion 62.

Further, the disconnecting member 100A may be arranged and constructed to slide between an inactive position in which the contact portion 104 may be drawn from the main portion 62 of the housing 60 and spaced from the force-receiving portion 84 of the hinge stopper 80 (FIGS. 9 and 11) and an active position in which the contact portion 104 may be introduced into the main portion of the housing 60 to press the force-receiving portion 84 of the hinge stopper 80 (FIGS. 10 and 12). As shown in FIG. 11, in the inactive position of the disconnecting member 100A, the hinge stopper 80 may be held in the connecting position in which the paw1 member 82 engages the engagement portion 22a of the connecting hole 20A. As a result, the connected condition of the hinge unit 50A (the housing 60) to the console body 10 may be locked. To the contrary, as shown in FIG. 12, in the active position of the disconnecting member 100A, the contact portion 104 may press the force-receiving portion 84 and rotate the hinge stopper 80 about the rotatably supporting portion 86 to the disconnecting position, so as to disengage the pawl member 82 from the engagement portion 22a of the connecting hole 20A. As a result, the connected condition of the hinge unit 50A (the housing 60) to the console body 10 may be unlocked.

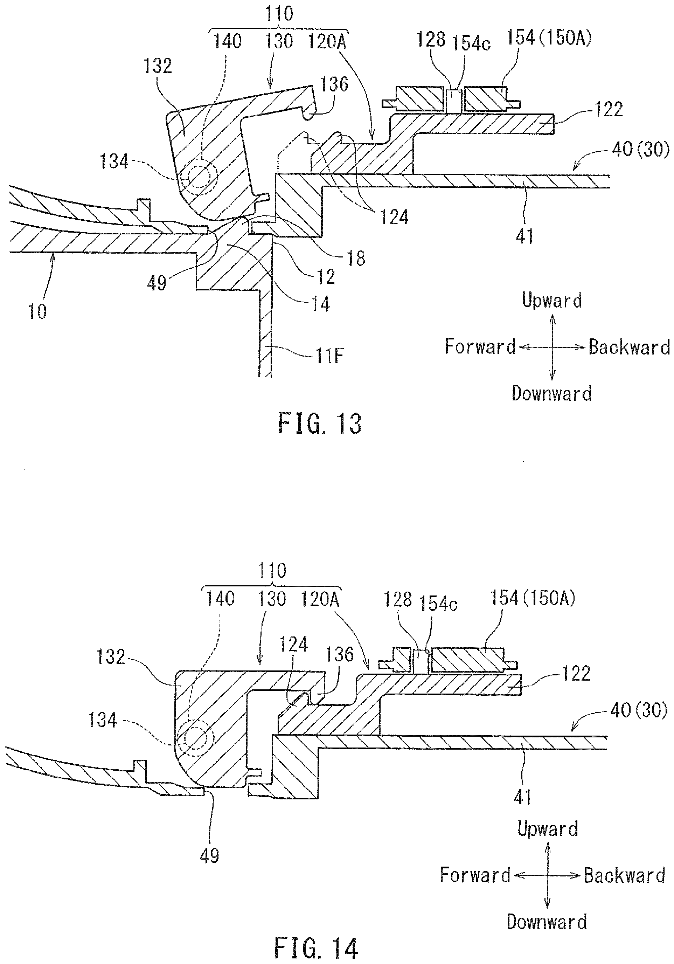

As shown in FIGS. 5, 6 and 8 to 10, the locking mechanism 110 may include a pair of right and left slide members 120B and 120A and an angled T-shaped rotatable member 130 positioned before the slide members 120B and 120A. The slide members 120B and 120A may be positioned between the right and left disconnecting members 100B and 100A in parallel. The rotatable member 130 may be positioned between the right and left hinge unit storing portion 42 (FIG. 3). Further, the rotatable member 130 may be positioned so as to correspond to the unlocking member 18 formed in the console body 10 in the lid-closed condition (FIG. 13).

As shown in FIG. 5, the right and left slide members 120B and 120A of the locking mechanism 110 may be the same. Therefore, in the following, the left slide member 120A will be described as a representative of the right and left slide members 120B and 120A. Elements that are the same in the left slide member 120A and the right slide member 120B will be identified by the same reference numerals and a description of the right slide member 120B may be omitted.

As shown in FIG. 8, the slide member 120A may include a slide base portion 122 elongated in the front-back direction, a hook portion 124 formed in a forward end of the slide base portion 122, a vertical slide projection 128 projected upward from the slide base portion 122, and a pair of flange-shaped slide guide members 126 projected laterally oppositely from the slide base portion 122. The slide member 120A thus constructed may be slidably supported by the slide member retainers 45 via the slide guide members 126 so as to slide in the front-back direction (FIG. 5).

Further, the slide member 120A may be arranged and constructed to slide between a retracted position, i.e., farthest rearward position (a position shown in FIG. 9 and a position shown by solid line in FIG. 13) in which the slide member 120A cannot engage the rotatable member 130 and an advanced position, i.e., farthest forward position (a position shown in FIGS. 10 and 14 and a position shown by broken line in FIG. 13) in which the slide member 120A can engage the rotatable member 130.

As shown in FIG. 8, the rotatable member 130 of the locking mechanism 110 may include a vertical main portion 132 and a laterally elongated engagement portion 136 that is formed in an upper rear portion of the main portion 132. The engagement portion 136 may have a downwardly-directed engagement pawl that is formed over the entire length thereof. Further, the engagement portion 136 may be configured to engage the hook portion 124 of the slide member 120A. The main portion 132 may be rotatably supported by the rotatable member retainer 46 (FIG. 5) via a rotation shaft 134 such that the rotatable member 130 may vertically rotate in the front-back direction as a whole. Further, the rotatable member 130 may be arranged and constructed such that a rotational trajectory of the engagement portion 136 may substantially be aligned with the hook portion 124 of the slide member 120A shifted to the advanced position.

As shown in FIGS. 13 and 14, the rotatable member 130 may be arranged and constructed to rotate between an unlocking position (FIG. 13) in which the engagement portion 136 is spaced upward from the hook portion 124 of the slide member 120A shifted to the advanced position (shown by the broken line in FIG. 13) and a locking position (FIG. 14) in which the engagement portion 136 engages the hook portion 124 of the slide member 120A shifted to the advanced position. Further, the rotatable member 130 may be normally biased toward the locking position by a rotatable member biasing spring 140, i.e., a coil spring, attached to the rotation shaft 134. As will be recognized, the engagement portion 136 of the rotatable member 130 may be configured to straddle the right and left slide members 120B and 120A.

As shown in FIG. 5, the rotatable member retainer 46 may be positioned on the inner shell 40 so as to correspond to the unlocking member 18 of the console body 10 in the lid-closed condition. Further, as shown in FIG. 13, the inner shell 40 may have an opening 49 formed therein. The opening 49 may be configured to allow the unlocking member 18 to project and contact the main portion 132 therethrough in the lid-closed condition. The unlocking member 18 projected through the opening 49 may press and rotate the rotatable member 130 counterclockwise via the rotation shaft 134 toward the unlocking position so as to hold the rotatable member 130 in the unlocking position. Further, as shown in FIG. 14, in a lid-opened condition in which the console lid 30 is opened, the rotatable member 130 (the main portion 132) may be spaced or disengaged from the unlocking member 18. As a result, the rotatable member 130 may be automatically rotated clockwise due to a spring force of the rotatable member biasing spring 140, so as to be returned to and held in the locking position.

As shown in FIGS. 9 and 10, the right and left knobs 150B and 150A may respectively be positioned behind the housing 60 of the right hinge unit 50B and the housing 60 of the left hinge unit 50A. Further, the right and left knobs 150B and 150A may substantially be the same except that they are shaped to be symmetrical to each other. Therefore, in the following, the left knob 150A will be described as a representative of the right and left latching knobs 150B and 150A. Elements that are the same in the left knob 150A and the right knob 150B will be identified by the same reference numerals and a description of the right knob 150B may be omitted. Further, in this embodiment, the right and left knobs 150B and 150A may be constructed as push type knobs.

As shown in FIG. 8, the knob 1.50A may include a manipulating portion 152 and a laterally elongated plate-shaped force transmitting portion 154 integrated with the manipulating portion 152. The knob 150A may have a plurality of flange-shaped slide guide members 156 formed in front and back sides of the force transmitting portion 154. The knob 150A thus constructed may be positioned on the inner shell 41. In particular, the knob 150A may be positioned such that the force transmitting portion 154 extends transversely across the front end of the latching rod 90A, the base portion 102 of the disconnecting member 100A and the slide base portion 122 of the slide member 120A while the manipulating portion 152 is received in the manipulating portion attachment portion 47 that is formed in one of the side frames 41a of the inner shell 41. Further, the knob 150A (the force transmitting portion 154) may be slidably supported by the knob retainers 48 via the slide guide members 156 so as to slide in the lateral direction.

As shown in FIGS. 9 and 10, the knob 150A may be arranged and constructed to move or slide between an initial position (FIG. 9 and a broken line in FIG. 10) in which the manipulating portion 152 is not manipulated or pushed and an operating position (a solid line in FIG. 10) in which the manipulating portion 152 is pushed to move the force transmitting portion 154 inward.

As shown in FIGS. 8 to 10, the knob 150A may have three elongated slots 154a, 154b and 154c that are formed in the force transmitting portion 154. The elongated slots 154a, 154b and 154c may be shaped to penetrate the force transmitting portion 154 in a thickness direction (vertical direction). Further, the elongated slots 154a, 154b and 154c maybe inclined forward and outward (i.e., backward and inward). The elongated slots 154a, 154b and 154c may be laterally separately formed in the force transmitting portion 154 so as to respectively correspond to the slide pin 92 formed in the front end of the latching rod 90A, the slide projection 108 formed in the base portion 102 of the disconnecting member 100A and the slide projection 128 formed in the slide base portion 122 of the slide member 120A. In particular, the elongated slots 154a, 154b and 154c may respectively slidably receive or engage the slide pin 92 of the latching rod 90A, the slide projection 108 of the disconnecting member 100A and the slide projection 128 of the slide member 120A. Thus, the knob 150A may be linked to the latching rod 90A, the disconnecting member 100A and the slide member 120A via the force transmitting portion 154. Therefore, when the force transmitting portion 154 moves or slides in the lateral direction, the slide pin 92, the slide projection 108 and the slide projection 128 may respectively slide along the elongated slots 154a, 154b and 154c while contacting inner surfaces of the elongated slots 154a, 154b and 154c, so that the latching rod 90A, the disconnecting member 100A and the slide member 120A may slide or move in the front-back direction in synchrony with each other.

Further, the elongated slots 154a, 154b and 154c may respectively be arranged and constructed such that in a condition in which the knob 150A is held in the initial position (FIG. 9), the slide pin 92, the slide projection 108 and the slide projection 128 may respectively be positioned in rear end portions of the elongated slots 154a, 154b and 154c whereas in a condition in which the knob 150A is shifted to the operating position (FIG. 10), the slide pin 92, the slide projection 108 and the slide projection 128 are respectively positioned in front end portions of the elongated slots 154a, 154b and 154c. Therefore, in the condition in which the knob 150A is held in the initial position (FIG. 9), the latching rod 90A, the disconnecting member 100A and the slide member 120A may respectively be held in the latched position (FIG. 9), the inactive position (FIGS. 9 and 11) and the retracted position (FIGS. 9 and 13) thereof. To the contrary, in the condition in which the knob 150A is shifted to the operating position (FIG. 10), the latching rod 90A, the disconnecting member 100A and the slide member 120A may respectively be held in the unlatched position (FIG. 10), the active position (FIGS. 10 and 12) and the advanced position (FIGS. 10 and 14) thereof.

An opening and closing operation of the console lid 30 connected to the console body 10 via the dual swing-mode console lid opening/closing mechanism will now be described with reference to FIGS. 1 to 15.

First, in the lid-closed condition in which the console lid 30 is closed (FIGS. 3, 6, 9, 11 and 13), each of the right and left hinge units 50B and 50A may be held in the connected condition in which each of the hinge units 50B and 50A is connected to the console body 10 while the connecting portion 66 of the housing 60 is inserted or fitted into each of the right and left connecting holes 20B and 20A of the console body 10 (FIG. 3). In this condition, the hinge stopper 80 of each of the hinge units 50B and 50A may be held in the connecting position in which the pawl member 82 engages the engagement portion 22a of each of the right and left connecting holes 20B and 20A (FIG. 11), so that the housing 60 may be secured to the console body 10 (the connected condition of the housing 60 to the console body 10 may be locked). Each of the right and left latching rods 90B and 90A may be held in the latched position (FIG. 9). Each of the right and left disconnecting members 100B and 100A may be held in the inactive position (FIGS. 9 and 11). Each of the right and left slide members 120B and 120A may respectively be held in the retracted position (FIGS. 9 and 13). The rotatable member 130 may be held in the unlocking position by the unlocking member 18 (FIGS. 9 and 13). Further, each of the right and left knobs 150B and 150A may be held in the initial position (FIGS. 6 and 9 and the broken line in FIG. 10). As previously described, in this condition, the slide pin 92 of each of latching rods 90B and 90A, the slide projection 108 of each of the disconnecting members 100B and 100A and the slide projection 128 of each of the slide members 120B and 120A may respectively be positioned in the rear end portions of the elongated slots 154a, 154b and 154c formed in the force transmitting portion 154 of each of the knobs 150A and 150B.

As shown in FIG. 10, in order to open the console lid 30 from left to right (i.e. in a first swing-mode), the left knob 150A may be manipulated to be moved from the initial position (the broken line in FIG. 10) toward the operating position (the solid line in FIG. 10) by pressing the manipulating portion 152. When the knob 150A is manipulated, the force transmitting portion 154 of the knob 150A may be moved from left to right. As a result, the slide pin 92, the slide projection 108 and the slide projection 128 respectively positioned in the rear end portions of the elongated slots 154a, 154b and 154c formed in the force transmitting portion 154 may move toward the front end portions of the elongated slots 154a, 154b and 154c, so that the latching rod 90A, the disconnecting member 100A and the slide member 120A may move forward in synchrony with each other against a spring force of the pull-back spring 90S.

As a result, the latching rod 90A may be shifted to the unlatched position (FIG. 10). Further, the disconnecting member 100A may be shifted to the active position (FIGS. 10 and 12). Also, the slide member 120A may be shifted to the advanced position (FIG. 10 and the broken line in FIG. 13). Due to shifting of the latching rod 90A, the hinge pin 90P may be drawn or disengaged from the pin insertion hole 16A of the console body 10 (FIG. 10). Due to shifting of the disconnecting member 100A to the active position, the contact portion 104 of the disconnecting member 100A may be introduced into the housing 60 to press the force-receiving portion 84 of the hinge stopper 80, so that the hinge stopper 80 of the left hinge unit 50A may move or rotate to the disconnecting position (FIGS. 10 and 12). Upon rotation of the hinge stopper 80, the pawl member 82 may be disengaged from the engagement portion 22a of the connecting hole 20A formed in the console body 10, so that the connected condition of the housing 60 to the console body 10 may be unlocked. Thus, the connecting portion 66 of the housing 60 is allowed to be removed or disengaged from the connecting hole 20A of the console body 10.

At this time, the right latching rod 90B, the right disconnecting member 100B and the right slide member 120B may respectively be held in the latched position, the inactive position and the retracted position (FIG. 10) because the right knob 150B is not manipulated. Therefore, the hinge pin 90P of the latching rod 90B may remain introduced into the pin insertion hole 16B of the console body 10. Further, the hinge stopper 80 of the right hinge unit 50B may be held in the connecting position, so that the connected condition of the housing 60 to the console body 10 may remain locked.

Thereafter, when a left side of the console lid 30 is lifted up or pulled upward while the left knob 150A is held in the operating position, the console lid 30 may start to rotate in the lid-opening direction about the hinge pin 90P of the right latching rod 90B and the hinge shaft 70 of the right hinge unit 50B. As a result, the connecting portion 66 of the housing 60 may be removed or disengaged from the connecting hole 20A of the console body 10, so that the left hinge unit 50A may be removed or disconnected from the console body 10 to reach a disconnected condition. At this time, the connecting portion 66 of the housing 60 may be smoothly removed or disengaged from the connecting hole 20A because the connecting portion 66 and the connecting hole 20A are respectively specially shaped as described above. As a result, as shown in FIGS. 1, 2 and 15, the console lid 30 may be continuously rotated about the hinge pin 90P of the right latching rod 90B and the hinge shaft 70 of the right hinge unit 50B. Thus, the console lid 30 may be opened from left to right (FIGS. 1, 2 and 15). Further, as previously described, the console lid 30 may be biased in the lid-opening direction by the spring force of the bias spring 75S attached to the hinge sleeve 75 of the right hinge unit 50B. Therefore, after the left hinge unit 50A is disconnected from the console body 10 to reach the disconnected condition, the console lid 30 may be easily rotated without any additional force. Further, due to the spring force of the bias spring 75S, the lid-opened condition may be maintained.

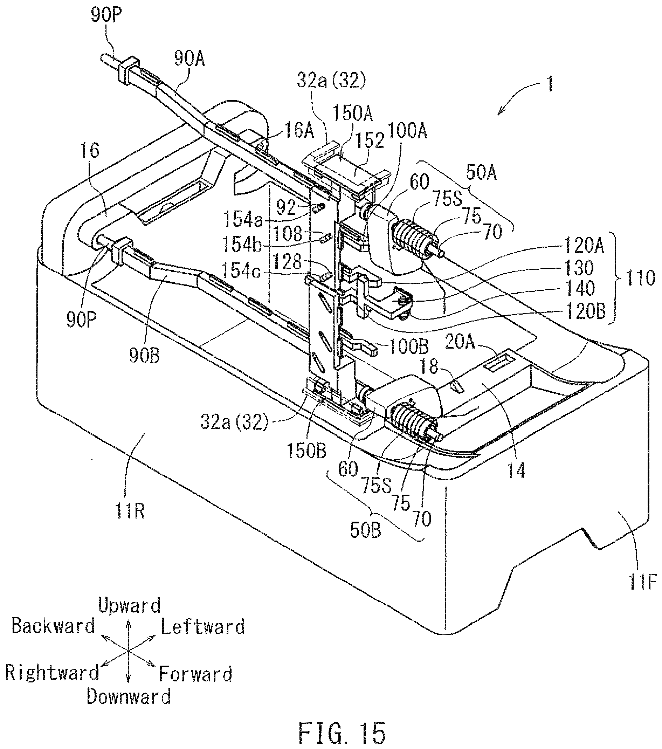

Further, as shown in FIG. 15, when the console lid 30 is opened, the locking mechanism 110 attached to the console lid 30 may be spaced from the front side wall edge 14 of the front side wall 11F of the console body 10. That is, as shown in FIG. 14, the rotatable member 130 of the locking mechanism 110 may be spaced or disengaged from the unlocking member 18. As a result, the rotatable member 130 may be automatically rotated clockwise due to the spring force of the rotatable member biasing spring 140, so as to be returned to and held in the locking position. At this time, as previously described, the slide member 120A may be shifted to the advanced position. Therefore, the engagement portion 136 of the rotatable member 130 may engage the hook portion 124 of the slide member 120A shifted to the advanced position, so that the slide member 120A may be locked in the advanced position.

Consequently, as shown in FIG. 10, the slide pin 92 of the latching rod 90A, the slide projection 108 of the disconnecting member 100A and the slide projection 128 of the slide member 120A may respectively be held in the front end portions of the elongated slots 154a, 154b and 154c of the knob 150A. Thus, the left latching rod 90A, the left disconnecting member 100A and the left knob 150A may respectively be held in the unlatched position, the active position and the operating position. Further, because the disconnecting member 100A may be held in the active position, the hinge stopper 80 of the left hinge unit 50A may be held in the disconnecting position (FIG. 12).

To the contrary, in order to close the console lid 30 thus opened again, the left side of the console lid 30 may be simply pressed down. As a result, the console lid 30 may be rotated in a lid-closing direction (downward) about the hinge pin 90P of the right latching rod 90B and the hinge shaft 70 of the right hinge unit 50B. When the console lid 30 is rotated until the connecting portion 66 of the housing 60 of the left hinge unit 50A may be inserted into the connecting hole 20A of the console body 10, the housing 60 (the hinge unit 50A) may be connected or anchored to the console body 10 to reach the connected condition (FIG. 3). Thus, the console lid 30 may be closed again (FIGS. 3, 6 and 9).

At this time, as shown in FIG. 13, the unlocking member 18 formed in the console body 10 may project and contact the main portion 132 of the rotatable member 130 through the opening 49, so as to rotate the rotatable member 130 counterclockwise about the rotation shaft 134 and hold the same in the unlocking position. As a result, the engagement portion 136 of the rotatable member 130 may be disengaged from the hook portion 124 of the slide member 120A, so that the slide member 120A may be released. Consequently, the latching rod 90A may be returned or shifted to the latched position due to the spring force of the pull-back spring 90S, so that the hinge pin 90P may engage the pin insertion hole 16A of the console body 10 (FIG. 9). Due to shifting of the latching rod 90A, the slide pin 92 of the latching rod 90A positioned in the front end portion of the elongated slot 154a formed in the force transmitting portion 154 of the left knob 150A may move to the rear end portions of the elongated slots 154, so that the left knob 150A may be returned or shifted to the initial position (FIG. 9).

As a result, the slide projection 108 of the disconnecting member 100A may move from the front end portion of the elongated slots 154b to the rear end portion of the elongated slot 154b. Simultaneously, the slide projection 128 of the slide member 120A may move from the front end portion of the elongated slot 154c to the rear end portion of the elongated slot 154c. Upon movement of the slide projection 108 and the slide projection 128, the disconnecting member 100A and the slide member 120A may respectively be moved backward, so as to respectively be shifted to the inactive position (FIGS. 9 and 11) and the retracted position (FIGS. 9 and FIG. 13). Further, due to shifting of the disconnecting member 100A to the inactive position, the contact portion 104 of the disconnecting member 100A may be drawn from the housing 60 to be separated from the force-receiving portion 84 of the hinge stopper 80 of the left hinge unit 50A, so that the hinge stopper 80 may move or rotate to the connecting position (FIGS. 9 and 11). Upon rotation of the hinge stopper 80, the pawl member 82 may engage the engagement portion 22a of the connecting hole 20A formed in the console body 10, so that the connected condition of the housing 60 of the left hinge unit 50A to the console body 10 may be locked again. Thus, the lid-closed condition may be maintained.

Conversely, in order to open the console lid 30 from right to left (i.e. in a second swing-mode), a right side of the console lid 30 is lifted up while manipulating the right knob 150B. Thus, the console lid 30 may be opened in the same manner as when the console lid 30 is opened in the first swing-mode. Further, the console lid 30 thus opened may be closed again by simply pressing down the right side of the console lid 30.

According to the console box 1 thus constructed, for example, when the console lid 30 is opened via the right hinge unit 50B (i.e., when the console lid 30 is opened in the first swing-mode), the left hinge unit 50A (the housing 60) may be removed from the console body 10 and rotated with the console lid 30. That is, when the console lid 30 is opened via the right hinge unit 50B, the left hinge unit 50A may not remain on the console body 10. Therefore, the console box 10 may have a good appearance in use.

Further, according to the console box 1, for example, when the console lid 30 is rotated about the hinge pin 90P of the right latching rod 90B and the hinge shaft 70 of the right hinge unit 50B in order to open the console lid 30 from left to right, the housing 60 of the right hinge unit 50B may be secured to the console body 10 (the connected condition of the housing 60 to the console body 10 may be locked via the hinge stopper 80). In addition, as previously described, the connecting portion 66 of the housing 60 of the right hinge unit 50B may have the specially shaped inner element 66c complementary to the oblique surface 26a of the right connecting hole 20B formed in the console body 10, which functions to prevent the housing 60 of the right hinge unit 50B from rotating about the hinge shaft 70 of the right hinge unit 50B in a direction in which the connecting portion 66 of the housing 60 of the right hinge unit 50B may be disengaged from the connecting hole 20B. Therefore, even when an excessively large force is applied to the console lid 30 to rotate the housing 60 of the right hinge unit 50B in the direction in which the connecting portion 66 of the housing 60 may be removed or disengaged from the connecting hole 20B, the connecting portion 66 of the housing 60 may be prevented from being disengaged from the connecting hole 20B, so that the connected condition of the right hinge unit 50B to the console body 10 may be reliably maintained. The same is true of the left hinge unit 50A.

Further, according to the console box 1, for example, when the console lid 30 is opened in the first swing-mode, the console lid 30 may be rotated about the hinge pin 90P of the right latching rod 90B and the hinge shaft 70 of the right hinge unit 50B that are positioned coaxially with each other. Therefore, the console lid 30 may be smoothly and stably opened.

Various changes and modifications may be made to the present embodiment without departing from the scope of the teaching. For example, in the embodiment, "push type knobs" are used as the right and left knobs 150B and 150A. However, "pull type knobs" may be used as the right and left knobs 150B and 150A. As will be recognized, in such a case, the elongated slots 154a, 154b and 154c formed in the force transmitting portions 154 may be shaped to be inclined forward and inward.

Further, in the embodiment, the knob 150A (150B) is linked to the latching rod 90A (90B), the disconnecting member 100A (100B) and the slide member 120A (120B) via the force transmitting portion 154 thereof. However, the knob 150A (150B) may be linked to the latching rod 90A (90B), the disconnecting member 100A (100B) and the slide member 120A (120B) via connecting wires.

Further, in the embodiment, the knob 150A (150B) has the elongated slots 154a, 154b and 154c formed in the force transmitting portion 154 and respectively arranged and constructed to slidably receive the slide pin 92 of the latching rod 90A (90B), the slide projection 108 of the disconnecting member 100A (100B) and the slide projection 128 of the slide member 120A (120B). However, the elongated slots 154a, 154b and 154c may be replaced with slide guide walls that are respectively configured to slidably guide the slide pin 92, the slide projection 108 and the slide projection 128.

Further, each of the bias spring 75S, the rotatable member biasing spring 140 and the stopper spring 80S is not limited to the coil spring. That is, a leaf spring may be used as each of the bias spring 75S, the rotatable member biasing spring 140 and the stopper spring 80S. In addition, a torsion spring instead of the compression spring may be used as the pull-back spring 90S.

Further, the rotatable member 130 of the locking mechanism 110 may be replaced with a pair of independent rotatable members that respectively correspond to the right and left slide members 120B and 120A.

Further, the right and left slide members 120B and 120A may be omitted. Instead, the locking mechanism 110 may be configured such that the rotatable member 130 may directly engage each of the right and left knobs 150B and 150A shifted to the operating position.

Further, the console box 1 may be made of materials other than resin.

Further, in the embodiment, the console box 1 is constructed such that the console lid 30 may be selectively rotated with respect to the right and left side wall edges 13A and 13B of the console body 10 in the lateral direction using the dual swing-mode console lid opening/closing mechanism. However, the console box 1 may be modified such that the console lid 30 may be rotated with respect to the front and rear side wall edges 14 and 15 of the console body 10 in the front-back direction (forward and backward) using the dual swing-mode console lid opening/closing mechanism.

## Claims

1. A dual swing-mode console lid opening/closing mechanism that allows a console lid (30) to be selectively opened and closed about opposite sides of a console body (10), comprising:
a pair of hinge units (50A, 50B) respectively positioned on opposite sides of the console lid (30) that respectively correspond to the opposite sides of the console body (10); and
a pair of manipulation knobs (150A, 150B) respectively corresponding to the hinge units (50A, 50B),
wherein the hinge units (50A, 50B) are respectively rotatably attached to the console lid (30) and respectively include hinge stoppers (80) that are respectively associated with the manipulation knobs (150A, 150B),
wherein the hinge units (50A, 50B) are arranged and constructed to be connected to the console body (10) in a lid-closed condition in which the console lid is closed, to form connected conditions of the hinge units (50A, 50B) to the console body (10),
wherein each of the hinge stoppers (80) is arranged and constructed to engage the console body (10) in the lid-closed condition, so as to lock the connected condition of the corresponding hinge unit (50A, 50B) to the console body (10), and
wherein each of the hinge stoppers (80) is arranged and constructed to be disengaged from the console body (10) by manipulating the corresponding manipulation knob (150A, 150B), so as to unlock the connected condition of the corresponding hinge unit (50A, 50B) to the console body (10).

2. The dual swing-mode console lid opening/closing mechanism of claim 1, wherein the hinge units (50A, 50B) respectively include hinge elements (60) and hinge shafts (70) that respectively function to rotatably attach the hinge elements (60) to the console lid (30).

3. The dual swing-mode console lid opening/closing mechanism of claim 2, wherein the console body (10) has connecting holes (20A, 20B) formed therein, wherein the hinge elements (60) respectively have connecting portions (66), and wherein the connecting portions (66) are respectively arranged and constructed to be fitted into the connecting holes (20A, 20B) in the lid-closed condition so as to form the connected conditions of the hinge units (50A, 50B).

4. The dual swing-mode console lid opening/closing mechanism of claim 3, wherein the connecting holes (20A, 20B) of the console body (10) respectively have outwardly faced oblique surfaces (26a) that are inclined downward and inward, wherein the connecting portions (66) of the hinge elements (60) respectively have inwardly faced oblique surfaces (66k) complementary to the outwardly faced oblique surfaces (26a) of the connecting holes (20A, 20B), and wherein the oblique surfaces (66k) of the connecting portions (66) engage the oblique surfaces (26a) of the connecting holes (20A, 20B) in a condition in which the connecting portions (66) are fitted into the connecting holes (20A, 20B).

5. The dual swing-mode console lid opening/closing mechanism of claim 1 further comprising a pair of disconnecting members (100A, 100B) movably attached to the console lid (30) and respectively linked to the manipulation knobs (150A, 150B), wherein each of the disconnecting members (100A, 100B) is arranged and constructed to move between an active position in which the disconnecting member (100A, 100B) contacts the corresponding hinge stopper (80) to disengage the hinge stopper (80) from the console body (10) and an inactive position in which the disconnecting member (100A, 100B) is spaced from the hinge stopper (80), and wherein each of the disconnecting members (100A, 100B) is moved to the active position by manipulating the corresponding manipulation knob (150A, 150B), so as to disengage the hinge stopper (80) from the console body (10).

6. The dual swing-mode console lid opening/closing mechanism of claim 5, wherein each of the hinge stoppers (80) includes a pawl member (82) and a rotatably supporting portion (86) and rotates between a connecting position in which the pawl member (82) engages the console body (10) and a disconnecting position in which the pawl member (82) is disengaged from the console body (10).

7. The dual swing-mode console lid opening/closing mechanism of claim 6 further comprising a locking mechanism (110) that functions to hold each of the hinge stoppers (80) in the disconnecting position.

8. The dual swing-mode console lid opening/closing mechanism of claim 7, wherein the locking mechanism (110) comprises a pair of slide members (120A, 120B) movably attached to the console lid (30) and respectively linked to the manipulation knobs (150A, 150B) and a rotatable member (130) rotatably attached to the console lid (30), wherein each of the slide members (120A, 120B) is arranged and constructed to move between a retracted position and an advanced position, and wherein the rotatable member (130) is arranged and constructed to rotate between an unlocking position in which the rotatable member (130) is spaced from each of the slide members (120A, 120B) shifted to the advanced position and a locking position in which the rotatable member (130) engages each of the slide members (120A, 120B) shifted to the advanced position.

9. The dual swing-mode console lid opening/closing mechanism of claim 8 further comprising an unlocking member (18) formed in the console body (10), wherein the unlocking member (18) is arranged and constructed to hold the rotatable member (130) in the unlocking position in the lid-closed condition.

10. The dual swing-mode console lid opening/closing mechanism of claim 2 further comprising a pair of latching rods (90A, 90B) movably attached to the console lid (30), wherein the latching rods (90A, 90B) respectively have hinge pins (90P) that are positioned coaxially with the hinge shafts (70) of the hinge units (50A, 50B), and wherein the hinge pins (90P) respectively rotatably engage the console body (10) in the lid-closed condition.

11. The dual swing-mode console lid opening/closing mechanism of claim 10, wherein the latching rods (90A, 90B) are respectively linked to the manipulation knobs (150A, 150B), and wherein each of the latching rods (90A, 90B) is moved in synchrony with the corresponding disconnecting member (100A, 100B) by manipulating the corresponding manipulation knob (150A, 150B), so that the hinge pin (90P) thereof is disengaged front the console body (10).
